(19) Europäisches Patentamt
European Patent Office
Office européen des brevets

(11) EP 1 141 131 B1

(12) # FASCICULE DE BREVET EUROPEEN

(45) Date de publication et mention de la délivrance du brevet:
**03.11.2004 Bulletin 2004/45**

(21) Numéro de dépôt: **99973052.6**

(22) Date de dépôt: **26.11.1999**

(51) Int Cl.7: **C08L 83/04**

(86) Numéro de dépôt international:
**PCT/FR1999/002933**

(87) Numéro de publication internationale:
**WO 2000/032694 (08.06.2000 Gazette 2000/23)**

(54) **COMPOSITIONS ORGANOPOLYSILOXANES DURCISSANT EN ELASTOMERES TRANSLUCIDES DES LA TEMPERATURE AMBIANTE EN PRESENCE D'HUMIDITE**

BEI RAUMTEMPERATUR IN GEGENWART VON FEUCHTIGKEIT ZU LICHTDURCHLÄSSIGEN KAUTSCHUKEN HÄRTENDE ORGANOPOLYSILOXANZUSAMMENSETZUNGEN

ORGANOPOLYSILOXANE COMPOSITIONS HARDENING INTO TRANSLUCENT ELASTOMERS AT ROOM TEMPERATURE IN THE PRESENCE OF HUMIDITY

(84) Etats contractants désignés:
**AT BE CH CY DE DK ES FI FR GB GR IE IT LI LU MC NL PT SE**

(30) Priorité: **27.11.1998 FR 9815160**

(43) Date de publication de la demande:
**10.10.2001 Bulletin 2001/41**

(73) Titulaire: **RHODIA CHIMIE**
**92408 Courbevoie Cédex (FR)**

(72) Inventeurs:
- **DALBE, Bernard**
**F-69005 Lyon (FR)**
- **MICHIELS, Sylvie**
**F-69200 Venissieux (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 367 696** **US-A- 5 698 653**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 141 131 B1

Printed by Jouve, 75001 PARIS (FR)

## Description

La présente invention a pour objet des compositions organopolysifoxanes monocomposantes, stables au stockage en absence d'humidité et réticulant en élastomères adhérents et translucides en couche mince (c'est-à-dire dans un intervalle d'épaisseur allant notamment de 0,3 à 3 mm), en opérant dès la température ambiante (c'est-à-dire dans un intervalle de températures allant de 5°C à 35°C) et en présence d'humidité.

Il est connu de préparer des compositions ayant ces propriétés par mélange principalement de polymère(s) diorganopolysiloxane(s) à groupements terminaux alkoxyles, de charge(s) minérale(s) ne générant pas d'opacité, de silanes substitués par des groupes hydrolysables particuliers, d'agent(s) améliorant l'adhérence et d'un catalyseur de durcissement (ou de réticulation).

Des compositions de ce type figurent plus spécialement dans US-A-5.674.936 et US-A-5.698.653. Les compositions conformes à cet art antérieur sont formées par mélange d'un polymère diorganopolysiloxane à groupements terminaux alkoxyles, d'une charge minérale siliceuse, d'un polymère diorganopolysiloxane non réactif à groupements terminaux trialkylsiloxyles, d'un catalyseur de durcissement à base d'un titanate de tétraalkyle et d'un agent améliorant l'adhérence consistant dans un isocyanurate de tris-1,3,5-(trialkoxysilyl)alkyle (dans le cas de US-A-5.674.936) ou dans un silane époxydé (dans le cas de US-A-5.698.653).

Les compositions conformes à cet art antérieur nécessitent impérativement l'emploi dès le départ d'un polymère diorganopolysiloxane déjà fonctionnalisé (comprenant au moins deux groupements alkoxyle à chaque extrémité de chaînes), lequel est obtenu en faisant réagir, dans une étape préalable séparée, un tri- ou un tétraalkoxysilane sur un polymère diorganopolysiloxane comprenant un groupement hydroxyle à chaque extrémité de chaînes, en présence d'un catalyseur. Les compositions conformes à cet art antérieur nécessitent impérativement encore l'emploi d'un agent améliorant l'adhérence.

La présente invention a pour but de proposer de nouvelles compositions organopolysiloxanes monocomposantes qui sont obtenues en partant directement de polymères organopolysiloxanes comportant dans leur structure des groupements hydroxyles.

Un autre but de la présente invention est de fournir des compositions organopolysiloxanes monocomposantes de ce type qui subiront in situ, au cours de leur préparation, une réaction de fonctionnalisation complète ou le plus proche possible du degré maximal de fonctionnalisation accessible et présenteront de ce fait un haut niveau de stabilité au stockage en cartouche.

Un autre but encore de la présente invention est de fournir des compositions organopolysiloxanes monocomposantes qui ne font pas appel obligatoirement à l'emploi d'un agent améliorant l'adhérence et qui permettent d'obtenir, sans emploi d'un pareil agent, des élastomères translucides dont l'adhérence est très bonne sur divers substrats, en particulier les matières plastiques comme par exemple le polychlorure de vinyle (PVC) et le polyméthacrylate de méthyle (PMMA).

Un autre but encore de la présente invention est de fournir des compositions organopolysiloxanes monocomposantes qui peuvent être préparées en utilisant indifféremment un mode discontinu ("Batch") ou un mode continu.

Il a donc été trouvé, et c'est ce qui fait l'objet de la présente invention, des compositions organopolysiloxanes monocomposantes, stables au stockage en absence d'humidité et réticulant en élastomères translucides et adhérents en présence d'humidité, caractérisées en ce qu'elles sont susceptibles d'être obtenues par mise en oeuvre, en opérant à l'abri de l'humidité dans un réacteur fermé unique sous agitation, fonctionnant selon un mode discontinu ou un mode continu, des étapes successives 1 à 3 ci-après définies chacunes d'elles étant conduite à une température se situant dans l'intervalle allant de 10° à 110°C:

- étape 1 : étape de fonctionnalisation au cours de laquelle on fait réagir :

  (i) au moins un diorganopolysiloxane linéaire réactif A comprenant un groupement hydroxyle à chaque extrémité de chaîne, de formule :

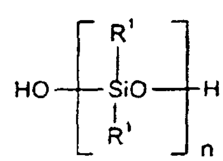

(I)

  dans laquelle :

- les substituants $R^1$, identiques ou différents, représentent chacun un radical monovalent hydrocarboné saturé ou non en $C_1$ à $C_{13}$, substitué ou non substitué, aliphatique, cyclanique ou aromatique ;
- n a une valeur suffisante pour conférer aux diorganopolysiloxanes de formule (I) une viscosité dynamique à 25°C allant de 1.000 à 1.000.000 mPa.s ;

(2i) et au moins une résine organopolysiloxane hydroxylée B présentant, dans sa structure, au moins deux motifs différents choisis parmi ceux de formules $(R^1)_3SiO_{1/2}$ (motif M), $(R^1)_2SiO_{2/2}$ (motif D), $R^1SiO_{3/2}$ (motif T) et $SiO_2$ (motif Q), l'un au moins de ces motifs étant un motif T ou Q, les radicaux $R^1$, identiques ou différents, ayant les significations données supra à propos de la formule (I), ladite résine ayant une teneur pondérale en groupement hydroxyle allant de 0,1 à 10 % ;
(3i) avec au moins un polyalkoxysilane C de formule :

$$(R^2)_aSi[(OCH_2CH_2)_bOR^3]_{4-a} \quad (II)$$

dans laquelle :

- le substituant $R^2$ représente un radical monovalent hydrocarboné saturé ou non en $C_1$ à $C_{13}$, substitué ou non substitué, aliphatique, cyclanique ou aromatique ;
- les symboles $R^3$, identiques ou différents, représentent chacun un radical alkyle, linéaire ou ramifié, en $C_1$ à $C_8$ ;
- a est zéro ou 1 ;
- b représente zéro ou 1 ;

(4i) en opérant la réaction de (i) et (2i) avec (3i) en présence d'une quantité catalytiquement efficace d'un catalyseur D de fonctionnalisation à l'exception de l'utilisation d'un dérivé organique du titane ;
(5i) le milieu réactionnel de l'étape 1 pouvant comprendre en outre :

+ au moins un alcool aliphatique ε en $C_1$ à $C_3$ ; et/ou
+ au moins un diorganopolysiloxane linéaire non réactif F de formule:

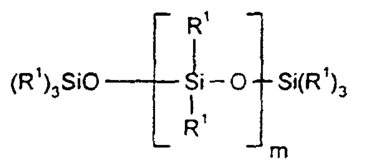
(III)

dans laquelle:

- les substituants $R^1$, identiques ou différents, ont les mêmes significations que celles données ci-avant pour le diorganopolysiloxane réactif A de formule (I) ;
- m a une valeur suffisante pour conférer aux polymères de formule (III) une viscosité dynamique à 25°C allant de 10 à 200.000 mPa.s ;

- étape 2 : étape de mélange (ou de "compoundage") au cours de laquelle on introduit dans le milieu de fonctionnalisation de l'étape 1, maintenu sous agitation, dans un ordre quelconque,

(6i) une charge minérale G à base de silice amorphe sous la forme d'un solide ;
(7i) une quantité efficace d'un catalyseur de durcissement H consistant dans au moins un dérivé organique du titane choisi dans le groupe constitué par :

+ des monomères H1 de formule :

$$Ti[(OCH_2CH_2)_c\ OR^4]_4 \quad (V)$$

dans laquelle :

- les substituants $R^4$, identiques ou différents, représentent chacun un radical alkyle, linéaire ou ramifié, en $C_1$ à $C_{12}$ ;
- c représente zéro, 1 ou 2 ;
- avec les conditions selon lesquelles, quand le symbole c représente zéro, le radical alkyle $R^4$ possède de 2 à 12 atomes de carbone, et quand le symbole c représente 1 ou 2, le radical alkyle $R^4$ possède de 1 à 4 atomes de carbone ;

+ des polymères H2 découlant de l'hydrolyse partielle des monomères de formule (IV) dans laquelle le symbole $R^4$ a la signification précitée avec le symbole c représentant zéro ;

(8i) éventuellement au moins un diorganopolysiloxane linéaire non réactif F répondant à la formule (III) mentionnée ci-avant ; et

(9i) éventuellement au moins un agent auxiliaire 1 connu de l'homme de métier, qui est choisi généralement, quand on en a besoin, en fonction des applications dans lesquelles les compositions selon la présente invention sont employées ;

- étape 3 : étape de finition au cours de laquelle le mélange de base obtenu, maintenu sous agitation, est soumis à une opération de dévolatilisation effectuée sous une pression inférieure à la pression atmosphérique.

Conformément à une disposition préférée de l'invention, on utilise, pour préparer les compositions organopolysiloxanes monocomposantes, sur la base de 100 parties en poids de diorganopolysiloxane(s) linéaire(s) hydroxyié(s) A :

- de 3 à 30 parties de résine(s) hydroxylée(s) B,
- de 2 à 15 parties de polyalkoxysilane(s) C,
- une quantité catalytiquement efficace de catalyseur de fonctionnalisation D,
- de 0 à 2 parties d'alcool(s) E,
- de 0 à 30 parties de diorganopolysiloxane(s) linéaire(s) non réactif(s) F,
- de 2 à 40 parties de charge siliceuse G,
- de 0,3 à 5 parties de dérivé(s) organique(s) du titane H, et
- de 0 à 20 parties d'agent(s) auxiliaire(s) 1.

Conformément à une disposition plus préférée de l'invention, on utilise, pour préparer les compositions organopolysiloxanes monocomposantes, sur la base de 100 parties en poids de diorganopolysiloxane(s) linéaire(s) hydroxylé(s) A :

- de 5 à 15 parties de résine(s) hydroxylée(s) B,
- de 3,5 à 7 parties de polyalkoxysilane(s) C,
- une quantité catalytiquement efficace de catalyseur de fonctionnalisation D,
- de 0 à 1 partie d'alcool(s) E,
- de 5 à 20 parties de diorganopolysiloxane(s) linéaire(s) non réactif(s) F,
- de 8 à 20 parties de charge siliceuse G,
- de 0,5 à 3 parties de dérivé(s) organique(s) du titane H, et
- de 0 à 20 parties d'agent(s) auxiliaire(s) I.

Les substituants $R^1$ mentionnés ci-avant pour les polymères organopolysiloxanes A et F (facultatifs) comprennent :

- les radicaux alkyles et halogénoalkyles ayant de 1 à 13 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 5 à 13 atomes de carbone tels que les radicaux cyclopentyle, cyclohexyle, méthyicyclohexyle, propylcyclohexyle, difluoro-2,3 cyclobutyle, difluoro-3,4 méthyl-5 cycloheptyle,
- les radicaux alcényles ayant de 2 à 8 atomes de carbone tels que les radicaux vinyle, allyle, butène-2 yle,
- les radicaux aryles et halogénoaryles mononucléaires ayant de 6 à 13 atomes de carbone tels que les radicaux

phényle, tolyle, xylyle, chlorophényle, dichlorophényle, trichlorophényle,

- les radicaux cyanoalkyles dont les chainons alkyles ont de 2 à 3 atomes de carbone tels que les radicaux β-cyanoéthyte et γ-cyanopropyle.

A titre d'exemples concrets de motifs $(R^1)_2SiO_{2/2}$ ou $(R^1)_2SiO$ présents dans les diorganopolysiloxanes hydroxylés A de formule (1) et dans les diorganopolysiloxanes non réactifs F facultatifs de formule (III), on peut citer :

$(CH_3)_2SiO$,

$CH_3(CH_2{=}CH)SiO$,

$CH_3(C_6H_5)SiO$,

$(C_6H_5)_2SiO$,

$CF_3CH_2CH_2(CH_3)SiO$,

$NC\text{-}CH_2CH_2(CH_3)SiO$,

$NC\text{-}CH(CH_3)CH_2(CH_2{=}CH)SiO$.

$NC\text{-}CH_2CH_2CH_2(C_6H_5)SiO$.

Il doit être compris que, dans le cadre de la présente invention, on peut utiliser comme polymères hydroxylés A de formule (I) un mélange constitué de plusieurs polymères hydroxylés qui diffèrent entre eux par la valeur de la viscosité et/ou la nature des substituants liés aux atomes de silicium. Il doit être indiqué de plus que les polymères hydroxylés A de formule (I) peuvent éventuellement comprendre des motifs T de formule $R^1SiO_{3/2}$ et/ou des motifs $SiO_2$ dans la proportion d'au plus 1 % (ces % exprimant le nombre de motifs T et/ou Q pour 100 atomes de silicium). Les mêmes remarques s'appliquent aux polymères non réactifs F( facultatifs) de formule (III).

Les substituants $R^1$ des polymères hydroxylés A et des polymères non réactifs F (facultatifs) avantageusement utilisés, du fait de leur disponibilité dans les produits industriels, sont les radicaux méthyle, éthyle, propyle, isopropyle, n-hexyle, phényle, vinyle et 3,3,3-trifluoropropyle. Plus avantageusement, au moins 80 % en nombre de ces substituants sont des radiaux méthyle.

On met en oeuvre des polymères hydroxylés A ayant une viscosité dynamique à 25°C allant de 1.000 à 1.000.000 mPa.s et, de préférence, allant de 10.000 à 200.000 mPa.s.

S'agissant des polymères non réactifs F (facultatifs), ils présentent une viscosité dynamique à 25°C allant de 10 à 200.000 mPa.s et, de préférence allant de 50 à 150.000 mPa.s.

Les polymères non réactifs F, quand on les utilise, peuvent être introduits soit en totalité dans le milieu réactionnel de l'étape 1, soit en totalité dans le milieu réactionnel de l'étape 2, soit à la fois dans l'un et l'autre de ces milieux ; dans ce dernier cas, la fraction de constituant F introduite dans le milieu de l'étape 1 peut être identique ou différente (en termes de nature et/ou de proportions du constituant de chaque fraction) de la fraction de constituant F introduite aussi dans le milieu de l'étape 2. De préférence, le constituant F est introduit en totalité dans le milieu réactionnel de l'étape 1.

Comme exemples de substituants $R^1$ des résines organopolysiloxanes hydroxylées B qui conviennent ou sont avantageusement utilisés, on peut citer les divers radicaux $R^1$ de ce type mentionnés nommément ci-avant pour les polymères hydroxylés A et les polymères non réactifs F (facultatifs). Ces résines silicones sont des polymères organopolysiloxanes ramifiés bien connus dont les procédés de préparation sont décrits dans de nombreux brevets. Comme exemples concrets de résines utilisables, on peut citer les résines MQ, MDQ, TD et MDT.

De préférence, comme exemples de résines utilisables on peut citer les résines organopolysiloxane hydroxylées B ne comprenant pas, dans leur structure, de motif Q. De manière plus préférentielle, comme exemples de résines

utilisables, on peut citer les résines TD et MDT hydroxylées comprenant au moins 20 % en poids de motifs T et ayant une teneur pondérale en groupement hydroxyle allant de 0,3 à 5 %. De manière encore plus préférentielle, on utilise des résines de ce type, dans la structure desquelles au moins 80 % en nombre des substituants $R^1$ sont des radicaux méthyle. Les groupements hydroxyles des résines B peuvent être portés par les motifs M, D et/ou T.

S'agissant des polyalkoxysilanes C de formule (II), on peut citer, à titre d'exemples concrets de substituants $R^2$ qui conviennent ou sont avantageusement utilisés, les mêmes radicaux que ceux mentionnés nommément ci-avant pour les substituants $R^1$ des polymères hydroxylés A et des polymères non réactifs F. Comme exemples de radicaux $R^3$, on peut citer les radicaux alkyles en $C_1$ à $C_4$, tels que les radicaux méthyle, éthyle; propyle, isopropyle et n-butyle.

Parmi les polyalkoxysilanes C de formule (III) qui sont utilisés dans le cadre de la présente invention, on peut notamment citer ceux ci-après listés :

$$Si(OCH_3)_4$$

$$Si(OCH_2CH_3)_4$$

$$Si(OCH_2CH_2CH_3)_4$$

$$(CH_3O)_3SiCH_3$$

$$(C_2H_5O)_3SiCH_3$$

$$(CH_3O)_3Si(CH{=}CH_2)$$

$$(C_2H_5O)_3Si(CH{=}CH_2)$$

$$(CH_3O)_3Si(CH_2\text{-}CH{=}CH_2)$$

$$(CH_3O)_3Si[CH_2\text{-}(CH_3)C{=}CH_2]$$

$$(C_2H_5O)_3Si(OCH_3)$$

$$Si(OCH_2\text{-}CH_2\text{-}OCH_3)_4$$

$$CH_3Si(OCH_2\text{-}CH_2\text{-}OCH_3)_3$$

$$(CH_2{=}CH)Si(OCH_2CH_2OCH_3)_3$$

$$C_6H_5Si(OCH_3)_3$$

$$C_6H_5Si(OCH_2\text{-}CH_2\text{-}OCH_3)_3.$$

Les polyalkoxysilanes C de formule (III) utilisés de préférence sont : $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$. $(CH_2{=}CH)Si(OC_2H_5)_3$.

En ce qui concerne le catalyseur D de fonctionnalisation, en présence duquel se déroute la réaction des polymères hydroxylés A et des résines hydroxylées B avec les polyalkoxysilanes C, ont peut faire appel en particulier aux composés suivants :

- l'acétate de potassium (cf. US-A-3.504.051 ),
- les oxydes minéraux divers (cf. FR-A-1.495.011),
- les carbamates (cf. EP-A-0.210.402),
- la lithine (cf. EP-A-0.367.696),
- la soude ou la potasse (cf. EP-A-0.457.693).

On recommande, dans le cadre de la présente invention, d'utiliser comme catalyseur D la lithine, de formule LiOH ou LiOH, $H_2O$. De préférence, elle est utilisée en solution dans au moins un alcool aliphatique E ayant de 1 à 3 atomes de carbone, tel que par exemple le méthanol, l'éthanol, l'isopropanol ou un mélange de ces alcools. Lorsque un (ou des) alcool(s) est (sont) présent(s) dans le milieu réactionnel, la quantité employée se situe dans l'intervalle allant de 0,1 à 2 parties en poids, et de préférence de 0,2 à 1 partie en poids, pour 100 parties de polymère(s) hydroxylé (s) A.

Par quantité catalytiquement efficace de catalyseur D, on entend une quantité telle que la vitesse de réaction de fonctionnalisation soit la plus élevée possible, notamment en utilisant $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$, $(CH_2{=}CH)Si(OC_2H_5)_3$ comme agent de fonctionnalisaiton. Dans la plupart des cas, on utilise de 0,001 à 5 moles de catalyseur pour 1 mole de groupements silanols (≡Si-OH) apportés d'une part par le (ou les) polymère(s) hydroxylé(s) A et d'autre part le (ou les) résine(s) hydroxylée(s) B. Dans le cas préféré faisant appel à la lithine, on utilise de 0,005 à 0,5 moles de LiOH pour 1 mole de groupements silanols.

Comme indiqué ci-avant, la charge minérale G est constituée de silice amorphe sous forme d'un solide. L'état physique dans lequel se présente la silice est indifférent, c'est-à-dire que ladite charge peut se présenter sous forme de poudre, de microperles, de granulés ou de billes, dès lors que cette charge est suffisamment dispersée au sein des compositions selon la présente invention, de manière à atteindre l'objectif souhaitée de translucidité.

A titre de silice amorphe susceptible d'être mise en oeuvre dans l'invention, conviennent toutes les silices précipitées ou pyrogénées (ou silices de combustion) connues de l'homme de l'art. Bien entendu, on peut utiliser aussi des coupages de différentes silices.

On préfère les silices de précipitation sous forme de poudre, les silices de combustion sous forme de poudre ou leurs mélanges ; leur surface spécifique BET est généralement supérieure à 40 $m^2/g$ et, de préférence, comprise ente 100 et 300 $m^2/g$ ; à titre plus préférentiel, on utilise les silices de combustion sous forme de poudre.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysilaxanes, des hexaorganodisiloxanes ou des hexaorganodisilazanes (cf. FR-A-1.126.884, FR-A-1.136.885, FR-A-1.236.005). Les charges traitées renferment, dans la plupart des cas, de 2 à 20 % de leur poids de composés organosiliciques.

En ce qui concerne le catalyseur de durcissement H, on peut mentionner, à titre d'exemples de symboles $R^4$ dans les dérivés organiques du titane H1 de formule (IV), les radicaux : méthyle, éthyle, propyle, isopropyle, butyle, isobutyle, hexyle, éthyl-2 hexyle, octyle, décyle et dodécyle.

Comme exemples concrets de monomères H1 de formule (IV), peuvent être cités : le titanate d'éthyle, le titanate de propyle, le titanate d'isopropyle, le titanate de butyle, le titanate d'éthyl-2 hexyle, le titanate d'octyle, le titanate de décyle, le titanate de dodécyle, le titanate de β-méthoxyèthyle, le titanate de β-éthoxyéthyle, le titanate de β-propoxyéthyle, le titanate de formule $Ti[(OCH_2CH_2)_2OCH_3]_4$. Comme exemples concrets de polymères H2 provenant de l'hydrolyse partielle des titanates monomères, pouvent être cités : les polymères H2 provenant de l'hydrolyse partielle des titanates d'isopropyle, de butyle ou d'éthyl-2 hexyle.

Pour la réalisation de l'invention, comme catalyseur de durcissement, on utilise de préférence les titanates monomères H1 suivants, pris seuls ou en mélangé : le titanate d'éthyle, le titanate de propyle, le titanate d'isopropyle, le titanate de butyle (n-butyle).

Les compositions organopolysiloxanes monocomposantes selon la présente invention peuvent contenir en outre un ou plusieurs agent(s) auxiliaire(s) I tel(s) que notamment, pour 100 parties en poids de polymère(s) diorganopolysiloxane(s) finéaire(s) hydroxylé(s) A :

- éventuellement de 0,1 à 10 parties d'un agent d'adhérence I1,
- éventuellement une quantité efficace d'au moins un composé pris dans le groupe formé par des antifongiques I2, des bactéricides I3, des diluants inertes organiques I4 (tels que par exemple : le toluène, le xylène, l'heptane, le "White-Spirit" le trichloroéthylène, le tétrachloroéthylène), des plastifiants I5 appartenant par exemple au groupe des alkylbenzénes de poids moléculaire supérieur à 200 g/mole comprenant un reste alkyle ramifié ou non ayant

de 10 à 30 atomes de carbone, des agents thixotropants 16.

De préférence, l'agent d'adhérence I1, quand on en utilise un, est choisi parmi les composés organosiliciques portant à la fois (1) des groupes hydrolysables liés à l'atome de silicium et (2) des groupes organiques substitués par des radicaux choisis dans le groupe des radicaux isocyanato, époxy, alkényie et isocyanurate.

A titre illustratif peuvent être cités les composés organosiliciques répondant aux formules ci-après (accompagnées des numéros des brevets les décrivant) :

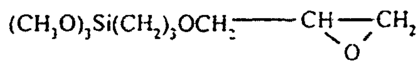

US-A-4.115.356

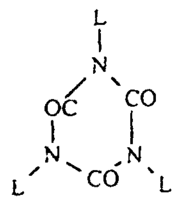

où L = $-(CH_2)_3-Si(OCH_3)_3$

US-A-3.517.001

Les compositions organopolysiloxanes monocomposantes conformes à la présente invention sont préparées à l'abri de l'humidité en opérant dans un réacteur fermé, muni d'une agitation, dans lequel on peut au besoin faire le vide, puis remplacé éventuellement l'air chassé par un gaz inerte anhydre, par exemple par de l'azote.

Pour cette préparation, il est recommandé d'utiliser un appareillage, fonctionnant selon un mode discontinu ou un mode continu, qui permette :

- de brasser intimement, à l'abri de l'humidité : dans l'étape 1, les constituants A, B, C, D, E (facultatif) et F (facultatif) ; puis dans l'étape 2, le mélange réactionnel de l'étape 1 complété par l'ajout des constituants G, H, F (facultatif) et 1 (facultatif) ; et
- d'évacuer dans l'étape 3 les matières volatiles présentes (polymères de bas poids moléculaires, alcool formé au cours de la réaction de fonctionnalisation, alcool E éventuellement utilisé).

A titre d'exemples d'appareillages, on peut citer : les disperseurs lents, les malaxeurs à pale, à hélice, à bras, à ancre, les malaxeurs planétaires, les malaxeurs à crochet, les extrudeuses à vis unique ou à plusieurs vis.

Chacune des étapes mise en oeuvre dans cette préparation est conduite à une température se situant dans l'intervalle allant de 10 à 110°C. De préférence, chacune des étapes est conduite à une température allant de 15 à 90°C.

L'étape 1 est conduite pendant une période de temps suffisante (allant par exemple de 10 secondes à 10 minutes) pour réaliser une réaction de fonctionnalisation complète ou le plus proche possible du degré maximal de fonctionnatisation accessible dans les conditions opératoires choisies.

L'étape 2 est conduite pendant une période de temps suffisante (allant par exemple de 10 secondes à 30 minutes) pour arriver à des compositions homogènes.

L'étape 3 est conduite généralement sous une pression réduite comprise entre $20.10^2$Pa et $900.10^2$ Pa, pendant une période de temps suffisante (allant par exemple de 10 secondes à 1 heure) pour évacuer toutes les matières volatiles.

Les compositions conformes à l'invention sont stables au stockage en l'absence d'eau, durcissant dès la température ambiante en présence d'humidité. Le durcissement (ou la réticulation) s'effectue de l'extérieur à l'intérieur de la masse des compositions. Il se forme d'abord, en surface, une peau puis la réticulation se poursuit dans la masse.

Elles peuvent être employées pour de multiples applications comme le jointoiement dans l'industrie du bâtiment, l'assemblage et le collage de matériaux les plus divers (métaux ; matières plastiques comme par exemple le PVC, le PMMA ; les caoutchoucs naturels et synthétiques ; bois ; carton ; faïence ; brique ; verre ; pierre ; béton ; éléments de maçonnerie), et ceci aussi bien dans le cadre de l'industrie du bâtiment que dans celui des industries de

l'automobile, de l'électroménager et de l'électronique.

Les compositions conformes à l'invention conduisent, après durcissement, à des élastomères translucides dont l'adhérence est très bonne sur divers substrats et qui présentent de plus l'avantage d'une part de ne pas jaunir au cours du temps sous l'action oxydante de l'air, et d'autre part de ne pas être corrosifs vis-à-vis de métaux ou alliages métalliques, comme par exemple l'aluminium, l'acier, le cuivre, le bronze, avec lesquels ils sont en contact ou sur lesquels ils adhèrent.

Les exemples suivants illustrent l'invention, sans en limiter sa portée.

EXEMPLE 1

Composition préparée selon un mode discontinu.

Etape 1 : on introduit dans un malaxeur muni d'une agitation tripale de type papillon, de 2 litres :

- 670 g d'une huile silicone α,ω-dihydroxypolydiméthylsiloxane A de viscosité 135.000 mPa.s à 25°C ayant 0,03 % en poids de radicaux hydroxyle (soit 0,2 g de radicaux OH) ; ce polyorganosiloxane A a pour formule moyenne :

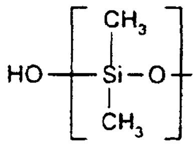
1531 (valeur calculée à partir de la teneur en radicaux hydroxyle) ;

- 90 g d'une huile α, ω-di(triméthylsiloxyl)polydiméthylsiloxane F de viscosité 1000 mPa.s à 25°C ; ce polyorganosiloxane F a pour formule moyenne :

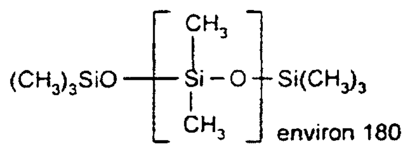
environ 180 ;

- et 90 g de résine organopolysiloxane hydroxylée B de type MDT ayant 1 % en poids de radicaux hydroxyle (soit 0,9 g de radicaux OH) et constituée de : 4 % en poids de motifs $(CH_3)_3SiO_{1/2}$, 71 % en poids de motifs $(CH_3)_2SiO_{2/2}$ et 25 % en poids de motifs $CH_3SiO_{3/2}$ ; cette résine présente une viscosité de 100 mPa.s à 25°C.

L'introduction a lieu dans l'ordre indiqué ci-dessus en opérant à température ambiante (23°C). Une fois l'introduction terminée, le contenu du malaxeur est agité, à 200 tours/minute, pendant 4 minutes.

Au bout de cette période, on ajoute 30 g de vinyltriméthoxysilane C : le contenu du malaxeur est agité ensuite, à 200 tours/minute, pendant 2 minutes.

Au bout de cette période, on introduit dans le malaxeur 4 g d'une solution à 4 % en poids de lithine (LiOH, $H_2O$ dans du méthanol (soit 0,16 g de lithine LiOH, $H_2O$ D et 3,84 g de méthanol E), et on laisse réagir sous agitation à 200 tours/minute durant 2 minutes.

Pendant l'étape 1, la température de la masse réactionnelle a varié dans une zone allant de 23C à 30°C.

Etape 2 : au bout de la période précitée, on introduit à la température ambiante (23°C) 100 g de silice de combustion G commercialisée par la Société DEGUSSA sous la marque AEROSIL 200, ayant une surface spécifique de 200 $m^2/g$, traitée par de l'octaméthylcyclotétrasiloxane, cet agent de traitement représentant environ 6 % du poids de la charge traitée ; cette silice traitée est introduite progressivement, sous agitation variable, sur une période de temps de 18 minutes ; une fois l'introduction terminée, le contenu du malaxeur est ensuite agité, à 400 tours/minute, pendant 4 minutes.

Au bout de cette période, on introduit 13 g de titanate de n-butyle H1, et on agite le contenu du malaxeur à 400 tours/minute, pendant 4 minutes.

Pendant l'étape 2, la température de la masse réactionnelle s'est élevée jusqu'à atteindre la valeur de 75°C.

Etape 3 : au bout de la période précitée, le contenu du malaxeur est encore agité à 150 tours/minute, à la température où il se trouve (environ 75°C), durant 6 minutes en opérant cette fois sous une pression inférieure à la

pression atmosphérique, de l'ordre de $40.10^2$ Pa, puis il est conditionné dans un emballage étanche à l'humidité de l'air et à la vapeur d'eau.

On obtient une composition monocomposante ayant l'aspect d'une pâte homogène, translucide et collante.

On mesure les différentes propriétés, recherchées, mentionnées ci-après :

1. Propriétés d'application :

• Temps Hors Collant :

C'est une mesure du temps de réticulation en surface de la composition, à 23°C et à une humidité relative de 50 %. Ce temps Hors Collant peut généralement être corrélé à plusieurs paramètres importants pour l'utilisateur tels que notamment le temps au bout duquel la surface de la composition n'est pas déformée sous l'effet d'un léger contact avec le doigt ou bien "n'attrape" plus la poussière présente dans l'air environnant.

Cette mesure est réalisée selon les indications de la norme ASTM C 679-87 (révisée en 1992), en utilisant une "masse rectangulaire" de 17 g au lieu de 30 g.

• Indice de jaune :

Une fraction de composition est étendue à la râcle sur une surface de façon à réaliser un film de 2 mm d'épaisseur. On laisse réticuler le film pendant 7 jours à 23°C et à une humidité relative de 50 %. Le film ainsi réticulé est ensuite introduit dans une étuve à 100°C pendant 7 jours.

Pour réaliser la mesure d'indice de jaune, on utilise un spectrocolorimétre commercialisé par la Société ACS, sous la référence SPECTRO SENSOR II.

Le film réticulé, après son séjour dans l'étude, est placé sur le spectrocolorimètre. On travaille en réflexion avec l'accessoire dit "illuminant C" (qui représente le rayonnement de la lumière moyenne du jour) et en utilisant une grande ouverture (10° d'angle). Dans ces conditions, on peut calculer un indice de jaune ; il s'agit de l'Indice de Jaune (1925), défini de la manière suivante :

$$\text{Indice de Jaune (1925)} = \frac{128.X - 106.Z}{Y}$$

où X, Y et Z sont les valeurs trichromatiques de la C.I.E. (Commission Internationale de l'Eclairage). Plus l'indice est faible, moins l'échantillon est jaune.

• Indice de transparence :

Une autre fraction de composition est étendue à la râcle sur une carte de contraste (commercialisée par la Société ERICHSEN Gmbh, sous la référence 2415) de façon à réaliser un film de 2 mm d'épaisseur. On laisse réticuler le film pendant 7 jours à 23°C et à une humidité relative de 50 %.

Pour mesurer l'indice de transparence, on utilise le spectrocolorimètre décrit ci-avant à propos de la mesure d'indice de jaune.

On se place en mode "transparence" et on effectue deux mesures : d'abord sur la partie blanche de la carte de contraste, puis sur la partie noire de cette dernière. Pour réaliser les mesures, on travaille en réflexion avec l'accessoire dit "illuminant C", avec une ouverture de 10° d'angle. L'indice de transparence est calculé en effectuant le rapport des valeurs Y fond noir/Y fond blanc.

2. Propriétés d'adhérence sur PVC (polychlorure de vinyle) :

L'autoadhérence de la composition est évaluée en déposant, à partir d'une autre fraction de composition, deux cordons d'environ 5 mm d'épaisseur sur différents supports en PVC. La longueur de chaque support, correspondant à la longueur de chaque cordon déposée, est d'environ 75 mm.

Deux cas peuvent se présenter :

- soit le support PVC est recouvert d'un film de plastique : dans ce cas, on retire ledit film et on effectue immédiatement le dépôt des deux cordons de composition ;
- soit le support PVC n'est pas recouvert d'un film de plastique : dans ce cas, on nettoie à l'aide d'un chiffon sec le support PVC préalablement à l'application des deux cordons de composition.

Ensuite, on laisse réticuler les cordons pendant 7 jours à 23°C et à 50 % d'humidité relative.
Puis les supports supportant les cordons sont immergés pendant 4 jours à 23°C dans un bain d'eau distillée à 23°C. Ensuite, on retire les supports du bain et on laisse sécher 24 heures à 23°C, avant d'effectuer le test d'adhérence par pelage.
Ce test s'effectue de la façon suivante :

+ à l'aide d'une lame de rasoir, dégager l'extrémité d'un des cordons sur environ 10mm;
+ le positionner à 120° d'angle par rapport au plan du support ;
+ exercer une traction, à la main, permettant de décoller ou d'arracher le cordon sur environ 50 mm ;
+ renouveler l'opération sur le deuxième cordon ;
+ examiner ensuite les flans d'adhérence sur le support.

S'il n'y a aucun film de composition résiduelle à la surface du support, la rupture est dite adhésive. La composition n'adhère pas sur le support PVC : on notera (-) dans le tableau des résultats correspondants.
S'il reste un film continu de composition à la surface du support, la rupture est dite cohésive. La composition adhère bien sur le support PVC : on notera (+) dans le tableau des résultats.

3. Propriétés mécaniques :

A l'aide d'une râcle, on étale un film de 2 mm d'épaisseur à partir d'une autre fraction de la composition à évaluer.
Dans le cas où l'on désire effectuer des mesures en 6 mm d'épaisseur, on étale une autre fraction de la composition dans une rainure de 6 mm d'épaisseur et de 20 mm de largeur. On arase à l'aide d'une spatule.
Dans tous les cas, on laisse réticuler la composition 7 jours à 23°C et à 50 % d'humidité relative.
Sur les produits réticulés. on mesure les propriétés suivantes :

a) Dureté Shore A :

Les mesures sont effectuées sur la face de la composition ayant réticulé en contact avec l'air. Pour le film de 6 mm, la mesure est effectuée sur une épaisseur, tandis que, pour le film de 2 mm, la mesure est effectuée en superposant 3 épaisseurs de films.
Les mesures sont effectuées selon les indications de la norme ASTM-D-2240.

b) Propriétés mécaniques sur film de 2 mm :

On prépare des éprouvettes de type H2 et on effectue les mesures selon les indications de la norme AFNOR-T-46002.
On relève les valeurs suivantes :

- résistance à la rupture (en MPa), notée R/R ;
- allongement à la rupture (en %), noté A/R .
- module à 100 % d'allongement (en MPa), noté M100.

Les résultats sont rassemblés dans le tableau 1 donné ci-après.

EXEMPLE 2

Composition préparée selon un mode continu.

La composition est préparée selon un mode continu en opérant dans une extrudeuse double-vis fabriquée par la Société WERNER PFLEIDERER. Les vis ont un diamètre égal à 58 mm et une longueur égale à 192 cm.
La vitesse de rotation des vis est fixée à 500 tours/minute.
Cette extrudeuse est équipée de 8 zones de régulation de température du fourreau, chaque zone ayant 24 cm de longueur. Les zones 1 à 8 du fourreau sont toutes soumises à un refroidissement par circulation d'eau à 15°C.
Etape 1 : on introduit dans la zone n° 1 de l'extrudeuse, en opérant à température ambiante (23°C) :

- 53 kg/heure de l'huile silicone $\alpha,\omega$-dihydroxypolydiméthylsiloxane A ayant les spécifications données ci-avant à l'exemple 1 ;

- 7,2 kg/heure de la résine organopolysitoxane hydroxylée B ayant les spécifications données ci-avant à l'exemple 1 ;
- 7,2 kg/heure d'huile α,ω-di(triméthylsiloxyl)polydiméthylsiloxane F de viscosité 100 mPa.s à 25°C, ayant pour formule moyenne :

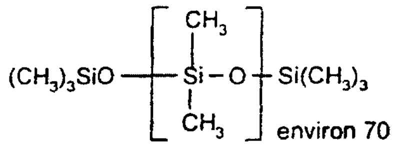 ;

- 0,3 kg/heure de la solution à 4 % en poids de lithine (LiOH, $H_2O$ dans du méthanol, qui est décrite ci-avant dans l'exemple 1 ; et
- 2,4 kg/heure de vinyltriméthoxysilane C.

Etape 2 : on introduit dans la zone n° 2 de l'extrudeuse, en opérant à température ambiante (23°C), 9 kg/heure de la silice de combustion G ayant les spécifications données ci-avant à l'exemple 1, puis le titanate de n-butyle H1 est introduit dans la zone n° 5 de l'extrudeuse à raison de 1 kg/heure, en opérant à nouveau cette alimentation à température ambiante (23°C).
Etape 3 : la matière contenue dans l'extrudeuse est soumise ensuite dans la zone n° 7 de l'appareil à une opération de dévolatilisation conduite sous une pression de l'ordre de $66.10^2$ Pa. Le débit de sortie de l'extrudeuse est de 80 kg/heure et la température de la composition qui sort de l'extrudeuse est égale à 80°C.
Les différentes propriétés figurent dans le tableau 1 suivant.

TABLEAU 1

| Propriétés | Exemple 1 | Exemple 2 |
|---|---|---|
| Temps Hors Collant (min) | 85 | 120 |
| Indice de Jaune | 4.0 | 4,0 |
| Indice de transparence | 12.5 | 14 |
| Adhérence sur PVC | | |
| PVC u (1) | + | + |
| PVC Kommerling (2) | + | + |
| PVC Rehau (3) | + | + |
| PVC Vêka (4) | + | + |
| PVC Anglian (5) | + | + |
| DSA ( 2 mm) | 21 | 17 |
| DSA ( 6 mm) | 22 | 20 |
| R/R ( 2 mm) en MPa | 2,4 | 2,4 |
| A/R ( 2 mm) en % | 820 | 950 |
| M 100 (2 mm) en MPa | 0,46 | 0,35 |

(1) PVC mis dans le commerce par la Société INTERPLAST INDUSTRIE sous la dénomination PVC u.
(2) PVC mis dans le commerce par la Société KOMMERLING sous la dénomination PVC Kommerling.
(3) PVC mis dans le commerce par la Société' REHAU sous la dénomination PVC Rehau.
(4) PVC mis dans le commerce par la Société VEKA sous la dénomination PVC Vêka.
(5) PVC mis dans le commerce par la Société ANGLIAN sous la dénomination PVC Anglian.

## Revendications

1. Compositions organopolysiloxanes monocomposantes, stables au stockage en absence d'humidité et réticulànt en élastomères translucides et adhérents en présence d'humidité, **caractérisées en ce qu'**elles sont susceptibles d'être obtenues par mise en oeuvre, en opérant à l'abri de l'humidité dans un réacteur fermé unique sous agitation, fonctionnant selon un mode discontinu ou un mode continu, des étapes successives 1 à 3 ci-après définies, chacune d'elles étant conduite à une température se situant dans l'intervalle allant de 10 à 110°C :

- étape 1 : étape de fonctionnalisation au cours de laquelle on fait réagir :

(i) au moins un diorganopolysiloxane linéaire réactif A comprenant un groupement hydroxyle à chaque extrémité de chaîne, de formule :

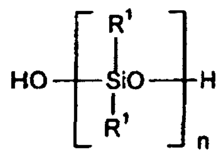

(I)

dans laquelle:

- les substituants $R^1$, identiques ou différents, représentent chacun un radical monovalent hydrocarboné saturé ou non en $C_1$ à $C_{13}$, substitué ou non substitué, aliphatique, cyclanique ou aromatique ;
- n a une valeur suffisante pour conférer aux diorganopolysiloxanes de formule (I) une viscosité dynamique à 25°C allant de 1.000 à 1.000.000 mPa.s ;

(2i) et au moins une résine organopolysiloxane hydroxylée B présentant, dans sa structure, au moins deux motifs différents choisis parmi ceux de formules $(R^1)_3SiO_{1/2}$ (motif M), $(R^1)_2SiO_{2/2}$ (motif D), $R^1SiO_{3/2}$ (motif T) et $SiO_2$ (motif Q), l'un au moins de ces motifs étant un motif T ou Q, les radicaux $R^1$, identiques ou différents, ayant les significations données supra à propos de la formule (I), ladite résine ayant une teneur pondérale en groupement hydroxyle allant de 0,1 à 10 % ;
(3i) avec au moins un polyalkoxysilane C de formule:

$$(R^2)_aSi[(OCH_2CH_2)_bOR^3]_{4-a} \qquad (II)$$

dans laquelle:

- le substituant $R^2$ représente un radical monovalent hydrocarboné saturé ou non en $C_1$ à $C_{13}$, substitué ou non substitué, aliphatique, cyclanique ou aromatique ;
- les symboles $R^3$, identiques ou différents, représentent chacun un radical alkyle, linéaire ou ramifié, en $C_1$ à $C_8$ ;
- a est zéro ou 1 ;
- b représente zéro ou 1 ;

(4i) en opérant la réaction de (i) et (2i) avec (3i) en présence d'une quantité catalytiquement efficace d'un catalyseur D de fonctionnalisation à l'exception de l'utilisation d'un dérivé organique du titane ;
(5i) le milieu réactionnel de l'étape 1 pouvant comprendre en outre :

+ au moins un alcool aliphatique E en $C_1$ à $C_3$ ; et/ou
+ au moins un diorganopolysiloxane linéaire non réactif F de formule :

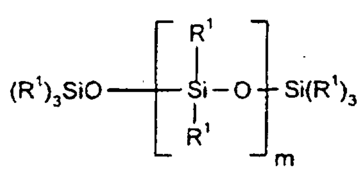

(III)

dans laquelle :

- les substituants $R^1$, identiques ou différents, ont les mêmes significations que celles données ci-avant pour le diorganopolysiloxane réactif A de formule (I) ;
- m a une valeur suffisante pour conférer aux polymères de formule (III) une viscosité dynamique à 25°C allant de 10 à 200.000 mPa.s ;

• étape 2 : étape de mélange (ou de "compoundage") au cours de laquelle on introduit dans le milieu de fonctionnalisation de l'étape 1, maintenu sous agitation, dans un ordre quelconque,

(6i) une charge minérale G à base de silice amorphe sous la forme d'un solide ;
(7i) une quantité efficace d'un catalyseur de durcissement H consistant dans au moins un dérivé organique du titane choisi dans le groupe constitué par :

+ des monomères H1 de formule:

$$Ti[(OCH_2CH_2)_c OR^4]_4 \quad (IV)$$

dans laquelle

- les substituants $R^4$, identiques ou différents, représentent chacun un radical alkyle, linéaire ou ramifié, en $C_1$ à $C_{12}$ ;
- c représente zéro, 1 ou 2 ;
- avec les conditions selon lesquelles, quand le symbole c représente zéro, le radical alkyle $R^4$ possède de 2 à 12 atomes de carbone, et quand le symbole c représente 1 ou 2, le radical alkyle $R^4$ possède de 1 à 4 atomes de carbone ;

+ des polymères H2 découlant de l'hydrolyse partielle des monomères de formule (IV) dans laquelle le symbole $R^4$ a la signification précitée avec le symbole c représentent zéro ;

(8i) éventuellement au moins un diorganopolysiloxane linéaire non réactif F répondant à la formule (III) mentionnée ci-avant ; et
(9i) éventuellement au moins un agent auxiliaire 1 connu de l'homme de métier, qui est choisi généralement, quand on en a besoin, en fonction des applications dans lesquelles les compositions selon la présente invention sont employées ;

• étape 3 : étape de finition au cours de laquelle le mélange de base obtenu, maintenu sous agitation, est soumis à une opération de dévolatilisation effectuée sous une pression inférieure à la pression atmosphérique.

2. Compositions selon la revendication 1, **caractérisées en ce que** l'on utilise, pour préparer les compositions organopolysiloxanes monocomposantes, sur la base de 100 parties en poids de diarganopolysiloxane(s) linéaire(s) hydroxylé(s) A :

- de 3 à 30 parties de résine(s) hydroxylée(s) B,
- de 2 à 15 parties de poiyalkoxysilane(s) C,
- une quantité catalytiquement efficace de catalyseur de fonctionnatisation D,
- de 0 à 2 parties d'alcool(s) E,
- de 0 à 30 parties de diorganopolysiloxane(s) linéaire(s) non réactif(s) F,
- de 2 à 40 parties de charge siliceuse G,
- de 0,3 à 5 parties de dérivé(s) organique(s) du titane H, et
- de 0 à 20 parties d'agent(s) auxiliaire(s) 1.

3. Compositions selon la revendication 1 ou 2, **caractérisées en ce que** les substituants $R^1$ des polymères hydroxylés A, des résines hydroxylées B et des polymères facultatifs F sont pris dans le groupe formé par :

- les radicaux alkyles et halogénoalkyles ayant de 1 à 13 atomes de carbone,
- les radicaux cycloalkyles et halogénocycloalkyles ayant de 5 à 13 atomes de carbone ,
- les radicaux alcényles ayant de 2 à 8 atomes de carbone,

- les radicaux aryles et halogénoaryles mononucléaires ayant de 6 à 13 atomes de carbone,
- les radicaux cyanoalkyles dont les chaînons alkyles ont de 2 à 3 atomes de carbone.

**4.** Compositions selon la revendication 3, **caractérisées en ce que** les substituants $R^1$ sont les radicaux méthyle, éthyle, propyle, isopropyle, n-hexyle, phényle, vinyle et 3,3,3-trifluoropropyle

**5.** Compositions selon l'une quelconque des revendications 1 à 4, **caractérisées en ce que** les résines organopolysiloxanes hydroxylées B sont des résines ne comprenant pas, dans leur structure, de motif Q.

**6.** Compositions selon l'une quelconque des revendications 1 à 5, **caractérisées en ce que**, s'agissant des polyalkoxysilanes C de formule (II) :

- les substituants $R^2$ sont les mêmes radicaux que ceux mentionnés ci-avant dans la revendication 3 pour les substituants $R^1$ ;
- les radicaux $R^3$ sont des radicaux alkyles en $C_1$ à $C_4$.

**7.** Compositions selon la revendication 6, **caractérisées en ce que** les polyalkoxysilanes C de formule (II) sont choisi parmi : $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$, $(CH_2{=}CH)Si(OC_2H_5)_3$.

**8.** Compositions selon l'une quelconque des revendications 1 à 6, **caractérisées en ce que** l'on utilise comme catalyseur D de fonctionnalisation, la lithine de formule LiOH ou LiOH, $H_2O$.

**9.** Compositions selon la revendication 8, **caractérisées en ce que** l'on utilise de 0,005 à 0,5 mole de lithine pour 1 mole de groupements silanols apportés d'une part par le (ou les) polymère(s) hydroxylé(s) A et d'autre part par le (ou les) résine(s) hydroxylée(s) B.

**10.** Compositions selon l'une quelconque des revendications 1 à 9, **caractérisées en ce que** la charge minérale G est choisie parmi les silices de précipitation, traitées ou non, sous forme de poudre, les silices de combustion, traitées ou non, sous forme de poudre ou leurs mélanges, les surfaces spécifiques BET de ces silices étant supérieures à 40 $m^2/g$.

**11.** Compositions selon l'une quelconque des revendications 1 à 10, **caractérisées en ce que** le catalyseur de durcissement H est choisi parmi des dérivés organiques du titane, incluant les monomères H1 de formule (IV) et les polymères H2 découlant de l'hydrolyse partielle des monomères H1, dans la structure desquels le symbole $R^4$ est pris dans le groupe formé par les radicaux : méthyle, éthyle, propyle, isopropyle, butyle, isobutyle, hexyle, éthyl-2 hexyle, octyle, décyle et dodécyle.

**12.** Compositions selon la revendication 11, **caractérisées en ce que** le catalyseur de durcissement est choisi parmi les titanates monomères H1 suivants, pris seuls ou en mélange : le titanate d'éthyle, le titanate de propyle, le titanate d'isopropyle, le titanate de butyle (n-butyle).

**13.** Elastomères translucides en couche mince allant notamment de 0,3 à 3 mm, adhérant sur divers substrats, obtenus par durcissement, à des températures allant de 5 à 35°C sous l'action de l'humidité, des compositions selon l'une quelconque des revendications 1 à 12.

**Patentansprüche**

**1.** Einkomponenten-Organopolysiloxan-Zusammensetzungen, lagerstabil bei Abwesenheit von Feuchtigkeit und vernetzend zu einem durchscheinenden und haftenden Elastomer in Anwesenheit von Feuchtigkeit, **dadurch gekennzeichnet, daß** sie geeignet sind erhalten zu werden, indem man unter Ausschluß von Feuchtigkeit in einem einzigen, geschlossenen Reaktor unter Rühren arbeitet, der in diskontinuierlicher oder kontinuierlicher Funktionsweise betrieben wird, wobei man die nachstehend definierten Stufen 1 bis 3 durchführt und jede von ihnen bei einer Temperatur realisiert, die sich im Intervall von 10 °C bis 110 °C befindet:

- Stufe 1 : Stufe der Funktionalisierung, in deren Verlauf man zur Reaktion bringt:

(i) mindestens ein reaktives lineares Diorganopolysiloxan A mit einer Hydroxylgruppe an jedem Ende der Kette, der Formel (I)

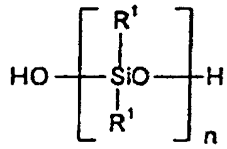 (I)

in der

- die Substituenten $R^1$, gleich oder verschieden, jeweils einen monovalenten, gesättigten oder nicht gesättigten Kohlenwasserstoff-Rest mit 1 bis 13 Kohlenstoffatomen darstellen, der substituiert oder nicht substituiert, aliphatisch, cyclanisch oder aromatisch ist;
- n einen ausreichenden Wert besitzt, um den Diorganopolysiloxanen der Formel (I) eine dynamische Viskosität bei 25 °C von 1000 bis 1000000 mPa.s zu verleihen; und

(2i) mindestens ein hydroxyliertes Organopolysiloxan-Harz B, das in seiner Struktur mindestens zwei unterschiedliche Struktureinheiten aufweist, ausgewählt unter denen der Formeln $(R^1)_3SiO_{1/2}$ (Struktureinheit M), $(R^1)_2SiO_{2/2}$ (Struktureinheit D) , $R^1SiO_{3/2}$ (Struktureinheit T) und $SiO_2$ (Struktureinheit Q), wobei mindestens eine von diesen Struktureinheiten eine Struktureinheit T oder Q ist, und die Reste $R^1$, gleich oder verschieden, die oben bei der Formel (I) angegebenen Bedeutungen besitzen, und wobei das genannte Harz ein Gewichtsverhältnis an Hydroxylgruppen von 0,1 bis 10 % besitzt;
(3i) mit mindestens einem Polyalkoxysilan C der Formel (II)

$$(R^2)_a Si\,[(OCH_2CH_2)_b OR^3]_{4-a} \qquad \text{(II)}$$

in der

- der Substituent $R^2$ einen monovalenten, gesättigten oder nicht gesättigten Kohlenwasserstoff-Rest mit 1 bis 13 Kohlenstoffatomen darstellt, der substituiert oder nicht substituiert, aliphatisch, cyclanisch oder aromatisch ist;
- die Symbole $R^3$, gleich oder verschieden, jeweils einen linearen oder verzweigten Rest Alkyl mit 1 bis 8 Kohlenstoffatomen darstellen;
- a gleich 0 oder 1 ist;
- b gleich 0 oder 1 ist;

(4i) indem man die Reaktion von (i) und (2i) mit (3i) in Anwesenheit einer katalytisch wirksamen Menge eines Katalysators D für die Funktionalisierung durchführt, mit Ausnahme der Verwendung eines organischen Derivates von Titan;
(5i) wobei das Reaktionsmedium von Stufe 1 außerdem umfassen kann:

+ mindestens einen aliphatischen Alkohol E mit 1 bis 3 Kohlenstoffatomen; und/oder
+ mindestens ein nicht reaktives lineares Diorganopolysiloxan F der Formel (III)

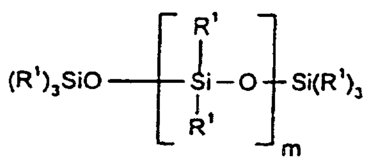 (III)

in der

- die Substituenten $R^1$, gleich oder verschieden, die gleichen Bedeutungen besitzen wie oben beim reaktiven Diorganopolysiloxan A der Formel (I) angegeben;
- m einen ausreichenden Wert besitzt, um den Polymeren der Formel (III) eine dynamische Viskosität bei 25 °C von 10 bis 200000 mPa.s zu verleihen;

• Stufe 2 : Stufe des Vermischens (oder "Kompoundierung") in deren Verlauf man in das Medium zur Funktionalisierung von Stufe 1 unter Rühren in irgendeiner Reihenfolge einträgt:

(6i) einen mineralischen Füllstoff G auf der Basis von amorphem Siliciumdioxid in Form eines Feststoffes;
(7i) eine ausreichende Menge eines Härtungskatalysators H, bestehend aus mindestens einem organischen Derivat von Titan, gewählt aus der Gruppe, die gebildet wird durch:

+ Monomere H1 der Formel

$$Ti\,[(OCH_2CH_2)_cOR^4]_4 \qquad (IV)$$

in der

- die Substituenten $R^4$, gleich oder verschieden, jeweils einen linearen oder verzweigten Rest Alkyl mit 1 bis 12 Kohlenstoffatomen darstellen;
- c gleich 0, 1 oder 2 ist;
- unter den Bedingungen, wonach in dem Fall, wo das Symbol c 0 darstellt, der Alkylrest $R^4$ 2 bis 12 Kohlenstoffatome besitzt, und wenn das Symbol c 1 oder 2 darstellt, der Alkylrest $R^4$ 1 bis 4 Kohlenstoffatome besitzt;

+ Polymere H2, die sich ergeben aus der partiellen Hydrolyse von Monomeren der Formel (IV), in der das Symbol $R^4$ die vorstehend angegebene Bedeutung besitzt, wobei das Symbol c 0 darstellt;

(8i) gegebenenfalls mindestens ein nicht reaktives lineares Diorganopolysiloxan F, das der oben erwähnten Formel (III) entspricht; und
(9i) gegebenenfalls mindestens ein dem Fachmann bekanntes Hilfsmittel I, das im allgemeinen, wenn daran Bedarf besteht, in Abhängigkeit von den Anwendungen ausgewählt wird, bei denen die Zusammensetzungen gemäß der vorliegenden Erfindung eingesetzt werden;

• Stufe 3 : Stufe der Fertigstellung, in deren Verlauf die erhaltene Basismischung unter Rühren einer Operation zum Austreiben der flüchtigen Bestandteile unterzogen wird, durchgeführt unter einem Druck, der niedriger ist als der atmosphärische Druck.

**2.** Zusammensetzungen nach Anspruch 1, **dadurch gekennzeichnet, daß** man zur Herstellung der Einkomponenten-Organopolysiloxan-Zusammensetzungen auf der Basis von 100 Gewichtsteilen von hydroxyliertem(n) linearem(n) Diorganopolysiloxan(en) A verwendet:

- 3 bis 30 Teile hydroxylierte(s) Harz(e) B,
- 2 bis 15 Teile Polyalkoxysilan(e) C,
- eine katalytisch wirksame Menge an Katalysator D für die Funktionalisierung,
- 0 bis 2 Teile Alkohol(e) E,
- 0 bis 30 Teile nicht reaktive(s) lineare(s) Diorganopolysiloxan(e) F,
- 2 bis 40 Teile siliziumhaltigen Füllstoff G,
- 0,3 bis 5 Teile organische(s) Derivat(e) von Titan H, und
- 0 bis 20 Teile Hilfsmittel I.

**3.** Zusammensetzungen nach Anspruch 1 oder 2, **dadurch gekennzeichnet, daß** die Substituenten $R^1$ der hydroxylierten Polymere A, der hydroxylierten Harze B und der fakultativen Polymere F aus der Gruppe genommen werden, die gebildet wird durch:

- die Reste Alkyl und Halogenalkyl mit 1 bis 13 Kohlenstoffatomen,

- die Reste Cycloalkyl und Halogencycloalkyl mit 5 bis 13 Kohlenstoffatomen,
- die Reste Alkenyl mit 2 bis 8 Kohlenstoffatomen,
- die mononuklearen Reste Aryl und Halogenaryl mit 6 bis 13 Kohlenstoffatomen,
- die Reste Cyanoalkyl, deren Kettenglied Alkyl 2 bis 3 Kohlenstoffatome besitzt.

**4.** Zusammensetzungen nach Anspruch 3, **dadurch gekennzeichnet, daß** die Substituenten $R^1$ Reste Methyl, Ethyl, Propyl, Isopropyl, n-Hexyl, Phenyl, Vinyl und 3,3,3-Trifluorpropyl sind.

**5.** Zusammensetzungen nach irgendeinem der Ansprüche 1 bis 4, **dadurch gekennzeichnet, daß** die hydroxylierten Organopolysiloxan-Harze B solche Harze sind, die in ihrer Struktur keine Struktureinheit Q umfassen.

**6.** Zusammensetzungen nach irgendeinem der Ansprüche 1 bis 5, **dadurch gekennzeichnet, daß**, wenn es sich um Polyalkoxysilane C der Formel (II) handelt:

- die Substituenten $R^2$ die gleichen Reste sind wie in Anspruch 3 bei den Substituenten $R^1$ angegeben;
- die Reste $R^3$ Reste Alkyl mit 1 bis 4 Kohlenstoffatomen sind.

**7.** Zusammensetzungen nach Anspruch 6, **dadurch gekennzeichnet, daß** die Polyalkoxysilane C der Formel (II) ausgewählt werden unter: $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$, $(CH_2{=}CH)Si(OC_2H_5)_3$.

**8.** Zusammensetzungen nach irgendeinem der Ansprüche 1 bis 6, **dadurch gekennzeichnet, daß** man als Katalysator D für die Funktionalisierung das Lithiumhydroxid der Formel LiOH oder LiOH,$H_2O$ verwendet.

**9.** Zusammensetzungen nach Anspruch 8, **dadurch gekennzeichnet, daß** man 0,005 bis 0,5 mol Lithiumhydroxid pro mol Silanolgruppen verwendet, die einerseits durch das oder die hydroxylierte(n) Polymer(e) A und andererseits durch das oder die hydroxylierte(n) Harz(e) B eingebracht werden.

**10.** Zusammensetzungen nach irgendeinem der Ansprüche 1 bis 9, **dadurch gekennzeichnet, daß** der mineralische Füllstoff G ausgewählt wird unter den Siliciumdioxiden aus der Fällung, behandelt oder nicht behandelt und in Pulverform, den Siliciumdioxiden aus der Verbrennung, behandelt oder nicht behandelt und in Pulverform, oder ihren Mischungen, wobei die spezifischen Oberflächen BET dieser Siliciumdioxide über 40 $m^2/g$ betragen.

**11.** Zusammensetzungen nach irgendeinem der Ansprüche 1 bis 10, **dadurch gekennzeichnet, daß** der Härtungskatalysator H ausgewählt wird unter den organischen Derivaten von Titan, einschließlich der Monomere H1 der Formel (IV) und der Polymere H2, die sich aus der partiellen Hydrolyse der Monomere H1 ergeben, wobei in deren Struktur das Symbol $R^4$ aus der Gruppe genommen wird, die gebildet wird durch die Reste: Methyl, Ethyl, Propyl, Isopropyl, Butyl, Isobutyl, Hexyl, 2-Ethylhexyl, Octyl, Decyl und Dodecyl.

**12.** Zusammensetzungen nach Anspruch 11, **dadurch gekennzeichnet, daß** der Härtungskatalysator H ausgewählt wird unter den folgenden monomeren Titanaten H1, allein genommen oder in Mischung: Ethyltitanat, Propyl-titanat, Isopropyl-titanat, Butyl(n-butyl)-titanat.

**13.** Durchscheinende Elastomere in dünner Schicht von insbesondere 0,3 bis 3 mm, die auf verschiedenen Substraten haften, erhalten durch Härtung der Zusammensetzungen nach irgendeinem der Ansprüche 1 bis 12 bei Temperaturen von 5 °C bis 35 °C unter der Einwirkung von Feuchtigkeit.

## Claims

**1.** Single-component organopolysiloxane compositions which are stable on storage in the absence of moisture and which crosslink to translucent and adherent elastomers in the presence of moisture, **characterized in that** they are capable of being obtained by carrying out, while excluding moisture, in a single closed reactor with stirring, operating according to a batchwise mode or a continuous mode, successive stages 1 to 3 defined below, each of them being carried out at a temperature lying within the range from 10 to 110°C:

- stage 1: functionalization stage, during which:

(i) at least one reactive linear diorganopolysiloxane A comprising a hydroxyl group at each chain end, of formula:

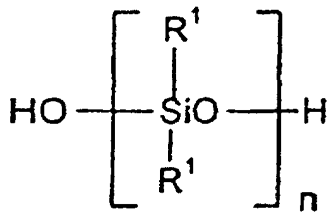

(I)

in which:

- the $R^1$ substituents, which are identical or different, each represent an aliphatic, cyclic or aromatic, saturated or unsaturated, substituted or unsubstituted, $C_1$ to $C_{13}$ monovalent hydrocarbonaceous radical;
- n has a value sufficient to confer, on the diorganopolysiloxanes of formula (I); a dynamic viscosity at 25°C ranging from 1 000 to 1 000 000 mPa·s;

(2i) and at least one hydroxylated organopolysiloxane resin B exhibiting, in its structure, at least two different units chosen from those of formulae $(R^1)_3SiO_{1/2}$ (M unit), $(R^1)_2SiO_{2/2}$ (D unit), $R^1SiO_{3/2}$ (T unit) and $SiO_2$ (Q unit), at least one of these units being a T or Q unit and the $R^1$ radicals, which are identical or different, having the meanings given above with respect to the formula (I), the said resin having a content by weight of hydroxyl group ranging from 0.1 to 10%;
(3i) are reacted with at least one polyalkoxysilane C of formula:

$$(R^2)_aSi[(OCH_2GH_2)_bOR^3]_{4-a} \qquad (II)$$

in which:

- the $R^2$ substituent represents an aliphatic, cyclanic or aromatic, saturated or unsaturated, substituted or unsubstituted, $C_1$ to $C_{13}$ monovalent hydrocarbonaceous radical;
- the $R^3$ symbols, which are identical or different, each represent a linear or branched $C_1$ to $C_8$ alkyl radical;
- a is zero or 1;
- b represents zero or 1;

(4i) the reaction of (i) and (2i) with (3i) being carried out in the presence of a catalytically effective amount of a functionalization catalyst D, with the exception of the use of an organic titanium derivative;
(5i) it being possible for the reaction medium of stage 1 additionally to comprise:

+ at least one aliphatic $C_1$ to $C_3$ alcohol E; and/or
+ at least one nonreactive linear diorganopolysiloxane F of formula:

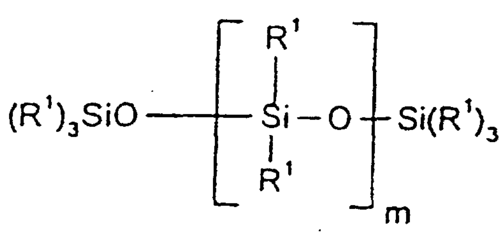

(III)

in which:

- the $R^1$ substituents, which are identical or different, have the same meanings as those given above for the reactive diorganopolysiloxane A of formula (I);
- m has a value sufficient to confer, on the polymers of formula (III), a dynamic viscosity at 25°C ranging from 10 to 200 000 mPa·s;

• stage 2: blending (or compounding) stage, during which:

(6i) an inorganic filler G based on amorphous silica in the form of a solid;
(7i) an effective amount of a curing catalyst H comprising at least one organic titanium derivative chosen from the group consisting of:

+ H1 monomers of formula:

$$Ti[(OCH_2CH_2)_c\ OR^4]_4 \quad (IV)$$

in which:

- the $R^4$ substituents, which are identical or different, each represent a linear or branched $C_1$ to $C_{12}$ alkyl radical;
- c represents zero, 1 or 2;
- with the conditions according to which, when the c symbol represents zero, the $R^4$ alkyl radical has from 2 to 12 carbon atoms and, when the c symbol represents 1 or 2, the $R^4$ alkyl radical has from 1 to 4 carbon atoms;

+ H2 polymers resulting from the partial hydrolysis of the monomers of formula (IV) in which the $R^4$ symbol has the abovementioned meaning with the c symbol representing zero;

(8i) optionally at least one nonreactive linear diorganopolysiloxane F corresponding to the formula (III) mentioned above; and
(9i) optionally at least one auxiliary agent I known to a person skilled in the art, which is generally chosen, when it is needed, according to the applications in which the compositions according to the present invention are employed;

are introduced in any order into the functionalization medium of stage 1, which is kept stirred;

• stage 3: finishing stage, during which the base blend obtained, kept stirred, is subjected to a devolatilization operation carried out under a pressure below atmospheric pressure.

**2.** Compositions according to claim 1, **characterized in that** the following are used to prepare the single-component organopolysiloxane compositions, on the basis of 100 parts by weight of hydroxylated linear diorganopolysiloxane (s) A:

- from 3 to 30 parts of hydroxlyated resin(s) B,
- from 2 to 15 parts of polyalkoxysilane(s) C,
- a catalytically effective amount of functionalization catalyst D,
- from 0 to 2 parts of alcohol(s) E,
- from 0 to 30 parts of nonreactive linear diorganopolysiloxane(s) F,
- from 2 to 40 parts of siliceous filler G,
- from 0.3 to 5 parts of organic titanium derivative(s) H, and
- from 0 to 20 parts of auxiliary agent(s) I.

**3.** Compositions according to claim 1 or 2, **characterized in that** the $R^1$ substituents of the hydroxylated polymers A, of the hydroxylated resins B and of the optional polymers F are taken from the group formed by:

- alkyl and haloalkyl radicals having from 1 to 13 carbon atoms,
- cycloalkyl and halocycloalkyl radicals having from 5 to 13 carbon atoms,
- alkenyl radicals having from 2 to 8 carbon atoms,

- mononuclear aryl and haloaryl radicals having from 6 to 13 carbon atoms,
- cyanoalkyl radicals in which the alkyl linkages have from 2 to 3 carbon atoms.

**4.** Compositions according to claim 3, **characterized in that** the $R^1$ substituents are the methyl, ethyl, propyl, isopropyl, n-hexyl, phenyl, vinyl and 3,3,3-trifluoropropyl radicals.

**5.** Compositions according to any one of claims 1 to 4, **characterized in that** the hydroxylated organopolysiloxane resins B are resins not comprising a Q unit in their structures.

**6.** Compositions according to any one of claims 1 to 5, **characterized in that**, as regards the polyalkoxysilanes C of formula (II):

- the $R^2$ substituents are the same radicals as those mentioned above in claim 3 for the $R^1$ substituents;
- the $R^3$ radicals are $C_1$ to $C_4$ alkyl radicals.

**7.** Compositions according to claim 6, **characterized in that** the polyalkoxysilanes C of formula (II) are chosen from: $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$ and $(CH_2{=}CH)Si(OC_2H_5)_3$.

**8.** Compositions according to any one of claims 1 to 6, **characterized in that** use is made, as functionalization catalyst D, of lithium hydroxide of formula LiOH or $LiOH \cdot H_2O$.

**9.** Compositions according to claim 8, **characterized in that** use is made of 0.005 to 0.5 mol of lithium hydroxide per 1 mol of silanol groups contributed, first, by the hydroxylated polymer(s) A and, secondly, by the hydroxylated resin(s) B.

**10.** Compositions according to any one of claims 1 to 9, **characterized in that** the inorganic filler G is chosen from treated or untreated precipitated silicas in the powder form, treated or untreated fumed silicas in the powder form, or their mixtures, the BET specific surface areas of these silicas being greater than 40 $m^2/g$.

**11.** Compositions according to any one of claims 1 to 10, **characterized in that** the curing catalyst H is chosen from organic titanium derivatives, including the H1 monomers of formula (IV) and the H2 polymers resulting from the partial hydrolysis of the H1 monomers, in the structure of which the $R^4$ symbol is taken from the group formed by the radicals: methyl, ethyl, propyl, isopropyl, butyl, isobutyl, hexyl, 2-ethylhexyl, octyl, decyl and dodecyl.

**12.** Compositions according to claim 11, **characterized in that** the curing catalyst is chosen from the following H1 monomer titanates, taken alone or as a mixture: ethyl titanate, propyl titanate, isopropyl titanate or butyl (n-butyl) titanate.

**13.** Translucent elastomers in a thin layer ranging in particular from 0.3 to 3 mm which adhere to various substrates and which are obtained by curing, at temperatures ranging from 5 to 35°C under the action of moisture, compositions according to any one of claims 1 to 12.